# EUROPEAN PATENT SPECIFICATION

(11) **EP 2 226 869 B1**
(45) Date of publication and mention of the grant of the patent: **19.12.2012**
(21) Application number: 10153881.7
(22) Date of filing: 17.02.2010
(51) Int. Cl.: H01M 2/02, H01M 10/04

(54) **Battery pack and mobile communication termInal**
Batteriepack und mobiles Kommunikationsendgerät
Bloc-batterie et terminal de communication mobile

(30) Priority: 18.02.2009 KR 20090013488
(43) Date of publication of application: 08.09.2010
(73) Proprietor: Samsung SDI Co., Ltd., Gyeonggi-do (KR)
(72) Inventor: Kim, Bongyoung, Yongin-si (KR)
(74) Representative: Santarelli

(56) References cited:
- EP-A2- 1 612 579
- DE-A1- 2 524 300
- US-A1- 2003 062 965
- US-A1- 2008 055 046

## Description

### BACKGROUND OF THE INVENTION

### 1. Field of the Invention

Aspects of the present invention relate to a battery pack and mobile communication terminal.

### 2. Description of the Related Art

A mobile communication terminal can perform data communication with a reader (or a base station) located near the terminal, through radio-frequency (RF) signal transmission/reception. The development of the radio frequency identification (RFID) technology using RF signals enables various additional applications, such as the use of transit fare payment cards and electronic transactions.

Such RF signal transmission/reception between a mobile terminal and a reader can be performed through an antenna installed in the terminal, or in a battery pack disposed in the terminal. In order to facilitate communication between an antenna and a reader, it is desirable to eliminate noise and to improve RF sensitivity.

### SUMMARY OF THE INVENTION

Aspects of the present invention provide a battery pack capable of enhancing RF sensitivity, thus ensuring improved communication between a mobile terminal including the battery pack, and an external electronic apparatus.

According to an aspect of the present invention, there is provided a battery pack including: a bare cell; and an absorber disposed on a large lateral surface of the bare cell, which is formed of a ferrite sintered body. In the sense of the present invention "is formed of " or "is composed of " means "comprise" or "include". Other components than the ferrite sintered body can be included in the absorber.

According to aspects of the present invention, the ferrite may be selected from the group consisting of nickel ferrite, zinc ferrite, nickel-zinc ferrite, and barium ferrite. The nickel-zinc ferrite may be composed of from 47 to 48 wt% of iron oxide, 30 wt% of nickel oxide, 20 wt% of zinc oxide, and from 2 to 3 wt% of copper oxide, based on the total weight of the ferrite. The absorber may have magnetic permeability of from 100 to 115T.

According to aspects of the present invention, the absorber may have a thickness of 1 mm, or less, for example, from 0.05 to 0.3 mm. The absorber may cover between from 50% to 100% of the large lateral surface of the bare cell.

According to aspects of the present invention, the battery pack may include a polymer layer covering the absorber, in order to compensate for the fragility of the ferrite. The absorber may be attached to the bare cell by a double-sided tape or an adhesive.

According to aspects of the present invention, the absorber may be disposed in a corresponding groove formed on the large lateral surface of the bare cell.

According to aspects of the present invention, the ferrite sintered body may include a plurality of individual sections. The sections may be triangular and/or rectangular.

According to aspects of the present invention, a loop antenna may be disposed on a large lateral surface of the absorber, and may be electrically connected to a protection circuit module. The loop antenna may transmit and/or receive a 13.56 MHz RF signal.

According to aspects of the present invention, the loop antenna may include a loop-shaped antenna pattern and a coverlay film covering the antenna pattern. The loop antenna may include an insulator surrounding the antenna pattern, instead of the coverlay film. The antenna pattern may be made of copper.

According to aspects of the present invention, the battery pack may be employed in a mobile communication terminal.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the exemplary embodiments taken in conjunction with the accompanying drawings, of which:
FIG. 1 is a perspective view of a battery pack, according to an exemplary embodiment of the present invention;
FIG. 2 is an exploded perspective view of a battery pack, according to an exemplary embodiment of the present invention;
FIGS. 3 and 4 are respectively 500X and 2000X scanning electron microscopic (SEM) images of an absorber, according to an exemplary embodiment of the present invention;
FIG. 5 is a perspective view of a protection circuit module, according to an exemplary embodiment of the present invention;
FIG. 6 is a perspective view of a battery pack, according to an exemplary embodiment of the present invention wherein a case and a label are omitted;
FIG. 7 is an exploded perspective view of a battery pack, according to another exemplary embodiment of the present invention;
FIGS. 8 and 9 are plan views of absorbers, according to other exemplary embodiments of the present invention; and
FIG. 10 is a perspective view of a loop antenna, according to another exemplary embodiment of the present invention.

### DETAILED DESCRIPTION OF THE EXEMPLARY EMBODIMENTS

Reference will now be made in detail to the exemplary embodiments of the present invention, examples of which are illustrated in the accompanying drawings, wherein like reference numerals refer to like elements throughout. The exemplary embodiments are described below, in order to explain the aspects of the present invention, by referring to the figures.

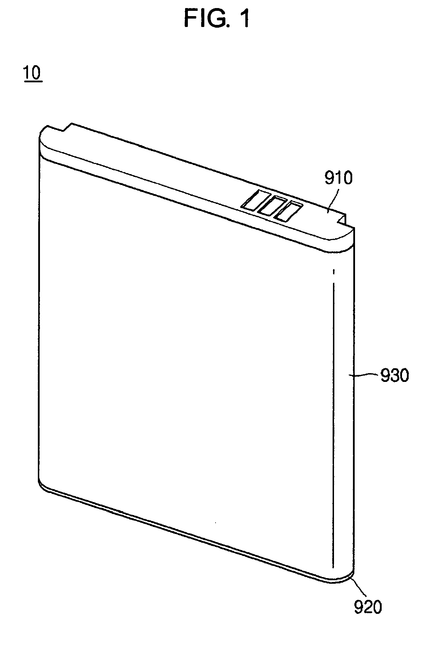

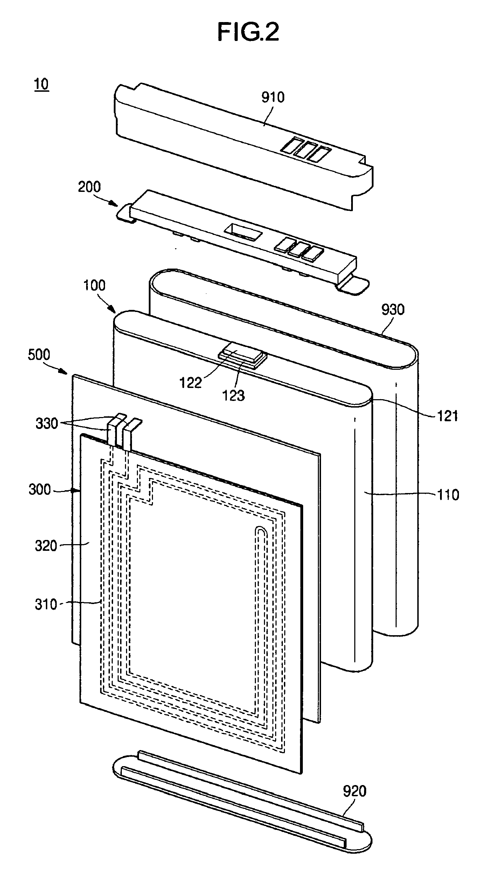

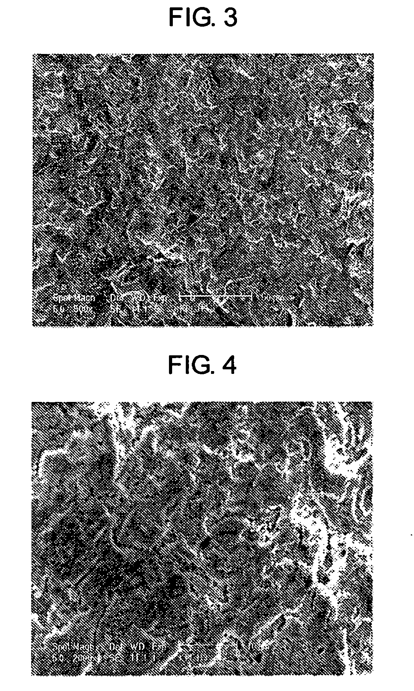

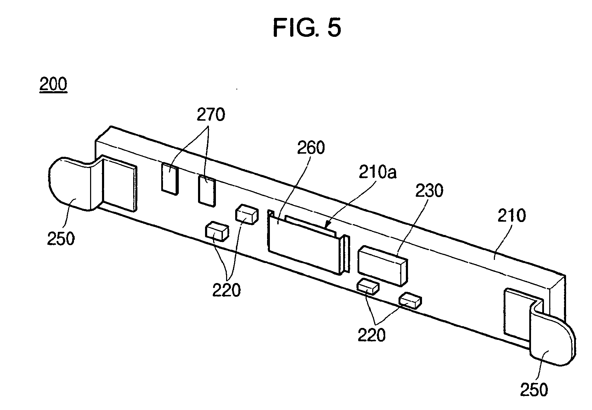

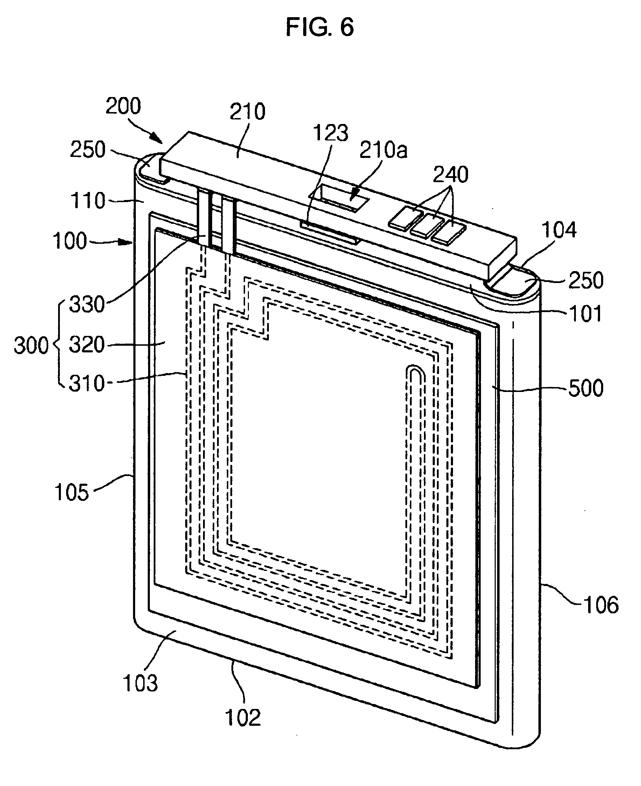

FIGS. 1 and 2 are respectively a perspective view and an exploded perspective view of a battery pack 10, according to an exemplary embodiment of the present invention. FIGS. 3 and 4 are respectively 500X and 2000X scanning electron microscopic (SEM) images of an absorber 500, according to an exemplary embodiment of the present invention. FIG. 5 is a perspective view of a protection circuit module 200, according to an exemplary embodiment of the present invention, and FIG. 6 is a perspective view of the battery pack 10, wherein a case and a label are omitted.

Referring to FIGS. 1 through 6, the battery pack 10 includes a bare cell 100, the protection circuit module 200, a loop antenna 300, the absorber 500, an upper case 910, a lower case 920, and a label 930. The absorber 500 is a ferrite sintered body having a high magnetic permeability. The absorber 500 is capable of improving the RF sensitivity of the loop antenna 300, leading to improved communication between an external reader and the battery pack 10.

The bare cell 100 may include: a can 110; an electrode assembly (not shown) disposed in the can; and a cap assembly to seal the can 110. The bare cell 100 is a minimum charging/discharging unit of the battery pack 10, and includes a positive electrode and a negative electrode.

The can 110 may be formed in a generally rectangular parallelepiped shape. An opening may be formed in a surface of the can 110 (e.g., the top surface in FIG. 2) other surfaces thereof (e.g., lateral surfaces in FIG. 2) may be curved. The can 110 may be made of a light-weight metal material such as aluminum (Al), and may serve as a positive terminal.

The electrode assembly may include a positive electrode plate, a negative electrode plate, and a separator interposed therebetween. The electrode assembly may be formed by winding the positive electrode plate, the negative electrode plate, and the separator into a jellyroll-type structure. The electrode assembly may be inserted into the can 110, via the opening, which is sealed by the cap assembly.

The cap assembly includes a cap plate 121, an electrode terminal 122, a gasket 123, an insulating plate (not shown), and a terminal plate (not shown). The cap assembly may be combined with the electrode assembly, along with an insulating case (not shown), to seal the opening of the can 110. The electrode terminal 122 may serve as a negative terminal.

The exterior of the bare cell 100 may include a top surface 101 on which the electrode terminal 122 is installed, a opposing bottom surface 102, a pair of large lateral surfaces 103 and 104, and a pair of small lateral surfaces 105 and 106. Here, the large lateral surfaces 103 and 104 have a larger surface area than the small lateral surfaces 105 and 106.

The protection circuit module 200 may be disposed on a surface (e.g., the top surface in FIG. 6) of the bare cell 100 and electrically connected to the bare cell 100. The protection circuit module 200 may include a protection circuit board 210, a protection circuit device 220, an integrated circuit (IC) chip 230, a charge-discharge terminal 240, a positive electrode lead plate 250, a negative electrode lead plate 260, and a loop antenna terminal 270. A positive temperature coefficient (PTC) device (not shown) may be further disposed on the bottom surface of the protection circuit board 210.

The protection circuit board 210 may be disposed adjacent to a surface of the bare cell 100 (e.g., the top surface in FIG. 6) and may be rectangular. Conductive metal patterns (not shown) may be formed in the protection circuit board 210 and may be electrically connected to the protection circuit device 220, the IC chip 230, the charge-discharge terminal 240, the positive electrode lead plate 250, the negative electrode lead plate 260, and the loop antenna terminal 270.

The protection circuit device 220 may be disposed on the protection circuit board 210. The protection circuit device 220 protects the battery pack 10, by monitoring the charge/discharge state of the bare cell 100, and the current, voltage, and temperature of the battery pack 10.

The IC chip 230 may be disposed on the bottom surface of the protection circuit board 210, and may be electrically connected to the loop antenna 300, via the loop antenna terminal 270. The IC chip 230 may perform RF communication with an external electronic apparatus (e.g., a RF signal reader), using the loop antenna 300.

The charge-discharge terminal 240 may be disposed on the top surface of the protection circuit board 210. The charge-discharge terminal 240 may serve as an electrical connector to supply power to an external electronic apparatus (not shown).

The positive electrode lead plate 250 may be disposed between the bare cell 100 and the protection circuit board 210, to electrically connect the cap plate 121 and the protection circuit board 210. Two positive electrode lead plates 250 may be disposed on opposing sides of the protection circuit board 210. The positive electrode lead plates 250 electrically connect the cap plate 121 to the protection circuit board 210. In some aspects, one of the positive electrode lead plates 250 may also electrically connect the cap plate 121 to the protection circuit board 210. The positive electrode lead plates 250 may be made of nickel or an alloy thereof, for example.

The negative electrode lead plate 260 may cover a welding through-hole 210a formed in a center portion of the protection circuit board 210. The negative electrode lead plate 260 may be electrically connected to the electrode terminal 122, by welding. The negative electrode lead plate 260 may be made of nickel or an alloy thereof, for example.

The loop antenna terminal 270 may be disposed on the bottom surface of the protection circuit board 210. The loop antenna terminal 270 may be electrically connected to a connection terminal 330 of the loop antenna 300.

The loop antenna 300 is shown as being disposed on the large lateral surface 103, but may be disposed on either of the large lateral surfaces 103 and 104. The loop antenna 300 may have a shape (e.g., a rectangular shape) corresponding to the large lateral surface 103. The loop antenna 300 includes an antenna pattern 310, a coverlay 320, and the connection terminal 330.

The antenna pattern 310 may be disposed in the coverlay 320, and may be coiled several times along edges of the coverlay 320. The antenna pattern 310 may be made of copper, for example. The coverlay 320 may be a thin film that covers the antenna pattern 310 and may be made of a polymer resin, e.g., polyimide. The connection terminal 330 may be connected to both ends of the antenna pattern 310, so as to be electrically connected to the loop antenna terminal 270.

The loop antenna 300 receives a RF signal from an external electronic apparatus (e.g., a reader) and transmits the RF signal to the IC chip 230. The IC chip 230 may then transmit a response RF signal to the external electronic apparatus, via the loop antenna 300. The RF transmission power of the loop antenna 300 may be an electromotive force induced by the RF signal from the external electronic apparatus. The loop antenna 300 may transmit and/or receive a 13.56 MHz RF, for example.

The absorber 500 may be a rectangular plate disposed between the bare cell 100 and the loop antenna 300. The absorber 500 can reduce a vortex signal generated by the loop antenna 300 and can increase the density of magnetic flux passing through the loop antenna 300, thereby improving RF sensitivity.

The absorber 500 may be formed of a ferrite sintered body. In more detail, the absorber 500 may be formed of a sintered body obtained by fully sintering one selected from nickel ferrite, zinc ferrite, nickel-zinc ferrite, and barium ferrite.

When the absorber 500 is formed of a nickel-zinc ferrite sintered body, the nickel-zinc ferrite may include from 47 to 48 wt% of iron oxide, about 30 wt% of nickel oxide, about 20 wt% of zinc oxide, and from 2 to 3 wt% of copper oxide, based on the total weight of the ferrite. FIGS. 3 and 4 are respectively 500X and 2000X SEM images of an absorber obtained by sintering a ferrite powder composed of 48 wt% of iron oxide, 30 wt% of nickel oxide, 20 wt% of zinc oxide, and 2 wt% of copper oxide.

A conventional absorber used in a battery pack or a mobile communication terminal is made of a composite of a ferrite powder and a rubber. However, because such an absorber includes rubber, the associated material costs and manufacturing processes are increased, as compared with an absorber according to aspects of the present invention.

That is, the absorber 500 may be manufactured by a simple process of mixing a ferrite powder and a binder, sintering, and removing the binder, which results in reduced manufacturing costs due to the omission of rubber. Moreover, the absorber 500 exhibits a higher magnetic permeability relative to a conventional absorber. Therefore, the absorber 500 has increased RF sensitivity, thereby improving a RF signal recognition distance between the loop antenna 300 and a reader.

The absorber 500 may have a thickness of about 1 mm, or less, for example, a thickness of from 0.05 to 0.3 mm. If the thickness of the absorber 500 is less than 0.05 mm, the absorber 500 may be easily fractured. On the other hand, if the thickness of the absorber 500 exceeds 1 mm, the thickness of the battery pack 10 may be unnecessarily increased, thereby decreasing the capacity density of the battery pack 10, with respect to the capacity of the bare cell 100. A polymer layer may be further disposed on the surface of the absorber 500, in order to increase the durability of the ferrite sintered body. The absorber 500 may be attached to the bare cell 100 by a double-sided tape or a liquid adhesive.

The absorber 500 may cover between from 50% to 100% of the large lateral surface 103. If the absorber 500 covers less than 50% of the large lateral surface 103, the RF sensitivity of the loop antenna 300 may not be significantly enhanced. On the other hand, if the absorber 500 larger than the large lateral surface 103, the capacity density of the battery pack 10, with respect to the capacity of the bare cell 100, may be decreased.

The absorber 500 may have magnetic permeability of from 100 to 115T. Taking into consideration that a mobile terminal uses a small-sized battery, and the absorber 500 has a thickness of less than about 1 mm, the magnetic permeability of the absorber 500 is significantly improved, as compared with a conventional absorber.

The upper case 910 and the lower case 920 cover the protection circuit module 200 and the bottom surface of the bare cell 100, respectively. The label 930 surrounds the large lateral surfaces 103 and 104 and the small lateral surfaces 105 and 106 of the bare cell 100. The upper case 910, the lower case 920, and the label 930 protect the bare cell 100, the protection circuit module 200, the absorber 500, and the loop antenna 300 from external impacts. The label 930 may be replaced with a hard plastic case. In this case, the absorber 500 and the loop antenna 300 may be formed on an inner surface of the case and coupled to the bare cell 100.

As described above, the battery pack 10 includes the absorber 500 formed of a ferrite sintered body. Therefore, the magnetic permeability thereof is increased, enhancing the RF sensitivity of the loop antenna 300, and resulting in improved communication between an external electronic apparatus and a mobile terminal including the battery pack 10.

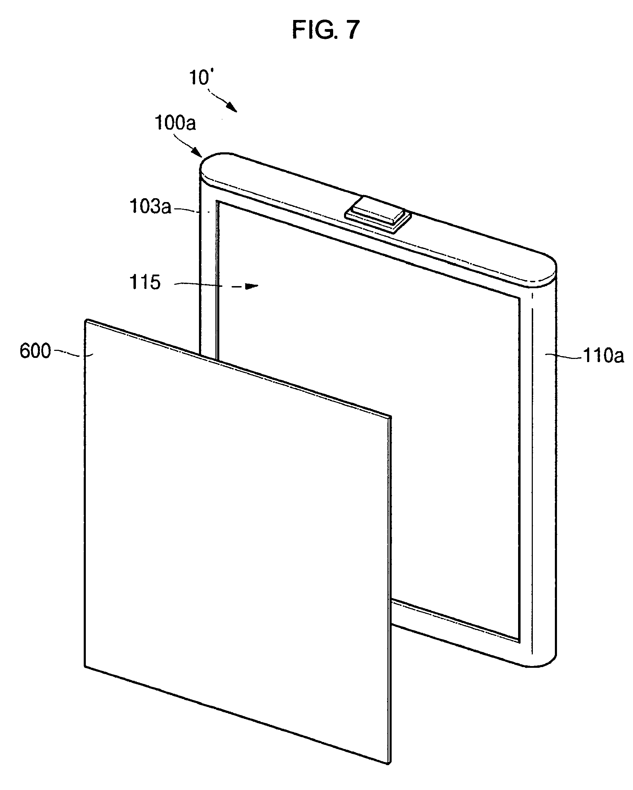

FIG. 7 is an exploded perspective view of a battery pack 10', according to another exemplary embodiment of the present invention. Referring to FIG. 7, the battery pack 10' includes a bare cell 100a and an absorber 600.

A groove 115 is formed in a large lateral surface 103a of a can 110a of the bare cell 100a. The groove 115 is configured to accommodate the absorber 600. The absorber 600 may be secured in the groove 115 by a double-sided tape or an adhesive. Since the absorber 600 is received in the groove 115, the overall volume of the battery pack may be reduced, while maintaining the capacity of the bare cell 100a, thereby leading to an increased capacity density of the battery pack.

The battery pack 10' is substantially the same as the battery pack 10, except for the shape of the bare cell 100a, i.e., except for the bare cell 100a including the groove 115. Therefore, a description of similar elements is omitted.

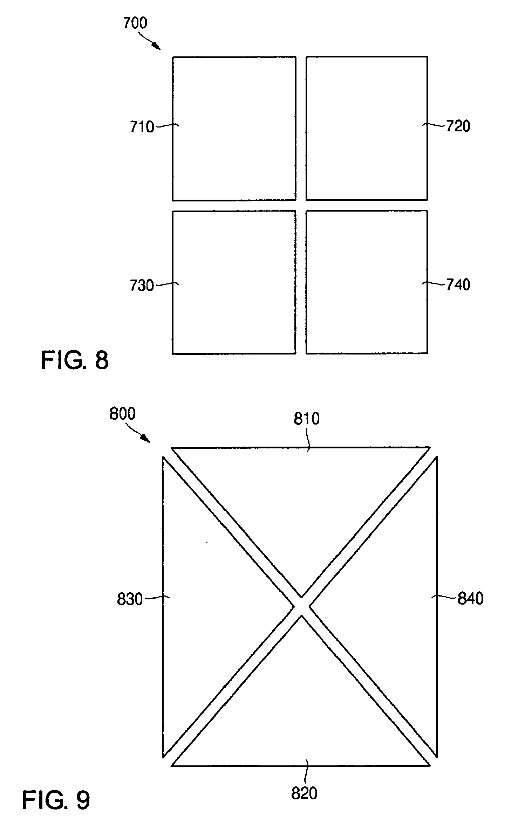

FIGS. 8 and 9 are plan views of absorbers 700, 800, according to other exemplary embodiments of the present invention. The absorbers 700, 800 can be applied to any of the previously described battery packs. Referring to FIGS. 8 and 9, the absorbers 700, 800 include ferrite sintered bodies that are divided into individual sections. In more detail, the absorber 700 includes four square-shaped sections 710, 720, 730, and 740, which are arranged such that the absorber 700 corresponds to a large lateral surface of a bare cell. The absorber 800 includes four triangle-shaped sections 810, 820, 830, and 840, which are arranged such that the absorber 800 corresponds to a large lateral surface of a bare cell.

During charging/discharging of a bare cell gas may be generated in a can, which causes the can to swell. Generally, when swelling occurs an electrode assembly is volumetrically increased, and thus, central portions of the large lateral surfaces of a bare cell protrude outward. Such swelling may break a single sheet-type absorber into a plurality of irregular sections. On the other hand, because the absorbers 700, 800 are formed of ferrite sintered bodies including a plurality of sections, such breakage does not occur.

That is, according to various embodiments, an absorber may include a ferrite sintered body that is divided into sections, which are separated by gaps that extend from a central portion of a large lateral surface of a bare cell. Therefore, even when swelling occurs in the bare cell, it is possible to prevent the absorber from being cracked or broken.

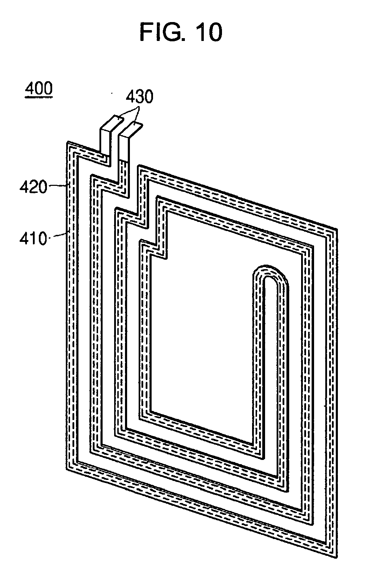

FIG. 10 is a perspective view of a loop antenna 400, according to another exemplary embodiment of the present invention. Referring to FIG. 10, the loop antenna 400 may include an antenna pattern 410, an insulator 420, and a connection terminal 430. the loop antenna 400 may be used in place of the loop antenna 300.

The antenna pattern 410 may be coiled several times into a loop that extends along edges a large lateral surface of a bare cell. The antenna pattern 410 may be made of copper. The insulator 420 may surround the antenna pattern 410. Thus, the insulator 420 has the same pattern as the antenna pattern 410. The connection terminal 430 may be connected to both ends of the antenna pattern 410, and may be electrically connected to a loop antenna terminal (not shown) disposed on a bottom surface of a protection circuit board (not shown).

The loop antenna 400 has similar RF sensitivity to that of the loop antenna 300 shown in FIGS. 1 through 6, but is more cost-effective due to the use of the insulator 420. Therefore, it is possible to reduce the manufacturing costs of a battery pack including the loop antenna 400.

Battery packs according to various exemplary embodiments of the present invention include an absorber formed of a ferrite sintered body, thereby enhancing the RF sensitivity of a loop antenna. Thus, communication between an external electronic apparatus and a mobile terminal including the inventive battery pack is improved, and the capacity density of the battery pack is increased, while reducing battery manufacturing costs.

As is apparent from the above description, provided is a battery pack that includes an absorber formed of a ferrite sintered body. The absorber has increased magnetic permeability, and thus, enhances the RF sensitivity of a loop antenna.

Moreover, the absorber does not include rubber, thus simplifying a battery pack manufacturing process and reducing manufacturing costs. In addition, it is possible to reduce the volume of a battery pack, while maintaining the capacity of a bare cell, thereby increasing the capacity density of the battery pack.

## Claims

1. A battery pack (10, 10') comprising:
a bare cell (100, 100a) having opposing first and second surfaces (103, 103a ; 104), and opposing third and fourth surfaces (105, 106) that are smaller than the first and second surfaces (103, 104); and
an absorber (500, 600, 700, 800) disposed on the first surface (103, 103a) of the bare cell (100, 100a), comprising a ferrite sintered body,
wherein the absorber (700, 800) comprises a plurality of separate sections (710, 720, 730, 740; 810, 820, 830, 840), the sections being separated by channels that extend across the center of the first surface (103, 103a).

2. The battery pack (10, 10') of claim 1, wherein the absorber has preferably a magnetic permeability of from 100 to 115T and wherein the ferrite is selected from the group consisting of nickel ferrite, zinc ferrite, nickel-zinc ferrite, and barium ferrite.

3. The battery pack (10, 10') according to any one of claims 1 to 2, wherein the ferrite is a nickel-zinc ferrite comprising from 47 to 48 wt% of iron oxide, 30 wt% of nickel oxide, 20 wt% of zinc oxide, and from 2 to 3 wt% of copper oxide, based on the total weight of the nickel-zinc ferrite.

4. The battery pack (10, 10') according to any one of claims 1 to 3, wherein the absorber (500, 600, 700, 800) has a thickness of 1 mm, or less, preferably from 0.05 to 0.3 mm.

5. The battery pack (10, 10') to any one of claims 1 to 4, wherein the absorber (500, 600, 700, 800) covers from 50% to 100% of the first surface (103, 103a) of the bare cell (100, 100a).

6. The battery pack (10, 10') according to any one of claims 1 to 5, further comprising a polymer layer disposed on the surface of the absorber (500, 600, 700, 800).

7. The battery pack (10, 10') according to any one of claims 1 to 6, further comprising a double-sided tape or an adhesive, to attach the bare cell (100, 100a) to the absorber (500, 600, 700, 800).

8. The battery pack (10') according to any one of claims 1 to 7, wherein the absorber (600) is disposed in a groove (115) corresponding to the shape of the absorber (600), formed in the first surface (103a) of the bare call (100a).

9. The battery pack (10, 10') according to any one of claims 1 to 8, wherein the sections (710, 720, 730, 740; 810, 820, 830, 840) are triangular and/or rectangular-shaped.

10. The battery pack (10, 10') according to anyone of claims 1 to 9, further comprising a loop antenna (300, 400) disposed on the absorber (500), the loop antenna (300, 400) preferably transmitting/receiving a 13.56 MHz radio frequency (RF) signal.

11. The battery pack (10, 10') according to claim 10, further comprising a protection circuit module (200) that is electrically connected to the loop antenna (300, 400).

12. The battery pack (10, 10') according to any one of claims 10 and 11, wherein the loop antenna (300) comprises:
a loop-shaped antenna pattern (310); and
a coverlay film (320) covering the antenna pattern (310).

13. The battery pack (10, 10') according to any one of claims 10 and 11, wherein the loop antenna (400) comprises:
a loop-shaped antenna pattern (410); and
an insulator (420) surrounding the antenna pattern (410).

14. The battery pack (10, 10') according to any one of claims 10 to 13, wherein the antenna pattern (310, 410) is made of copper.

15. A mobile communication terminal comprising the battery pack (10, 10') of any one of claims 1 to 14.

## Patentansprüche

1. Batteriepack (10, 10'), der Folgendes umfasst:
eine nackte Zelle (100, 100a) mit einer ersten und einer zweiten Oberfläche (103, 103a; 104), die einander gegenüber liegen, und einer dritten und einer vierten Oberfläche (105, 106), die einander gegenüber liegen und die kleiner als die erste und die zweite Oberfläche (103, 104) sind; und
einen Absorber (500, 600, 700, 800), der auf der ersten Oberfläche (103, 103a) der nackten Zelle (100, 100a) angeordnet ist und einen Ferritsinterkörper umfasst;
wobei der Absorber (700, 800) mehrere getrennte Abschnitte (710, 720, 730, 740; 810, 820, 830, 840) umfasst, wobei die Abschnitte durch Kanäle getrennt sind, die sich quer über die Mitte der ersten Oberfläche (103, 103a) erstrecken.

2. Batteriepack (10, 10') nach Anspruch 1, wobei der Absorber vorzugsweise eine magnetische Durchlässigkeit von 100 bis 115T aufweist und wobei der Ferrit aus der Gruppe bestehend aus Nickelferrit, Zinkferrit, Nickel-Zinkferrit und Bariumferrit ausgewählt ist.

3. Batteriepack (10, 10') nach einem der Ansprüche 1 bis 2, wobei der Ferrit ein Nickel-Zinkferrit ist, der 47 bis 48 Gew.-% Eisenoxid, 30 Gew.-% Nickeloxid, 20 Gew.-% Zinkoxid und 2 bis 3 Gew.-% Kupferoxid umfasst, bezogen auf das Gesamtgewicht des Nickel-Zinkferrits.

4. Batteriepack (10, 10') nach einem der Ansprüche 1 bis 3, wobei der Absorber (500, 600, 700, 800) eine Dicke von 1 mm oder weniger, vorzugsweise von 0,05 bis 0,3 mm aufweist.

5. Batteriepack (10, 10') nach einem der Ansprüche 1 bis 4, wobei der Absorber (500, 600, 700, 800) 50 % bis 100 % der ersten Oberfläche (103, 103a) der nackten Zelle (100, 100a) bedeckt.

6. Batteriepack (10, 10') nach einem der Ansprüche 1 bis 5, der weiterhin eine Polymerschicht umfasst, die auf der Oberfläche des Absorbers (500, 600, 700, 800) angeordnet ist.

7. Batteriepack (10, 10') nach einem der Ansprüche 1 bis 6, der weiterhin ein doppelseitiges Klebeband oder einen Klebstoff umfasst, um die nackte Zelle (100, 100a) an dem Absorber (500, 600, 700, 800) anzubringen.

8. Batteriepack (10') nach einem der Ansprüche 1 bis 7, wobei der Absorber (600) in einer Nut (115) angeordnet ist, die der Form des Absorbers (600) entspricht und die in der ersten Oberfläche (103a) der nackten Zelle (100a) ausgebildet ist.

9. Batteriepack (10, 10') nach einem der Ansprüche 1 bis 8, wobei die Abschnitte (710, 720, 730, 740; 810, 820, 830, 840) dreieck- und/oder rechteckförmig sind.

10. Batteriepack (10, 10') nach einem der Ansprüche 1 bis 9, der weiterhin eine Schleifenantenne (300, 400) umfasst, die auf dem Absorber (500) angeordnet ist, wobei die Schleifenantenne (300, 400) vorzugsweise ein 13,56-MHz-Radiofrequenzsignal (RF-Signal) sendet/empfängt.

11. Batteriepack (10, 10') nach Anspruch 10, der weiterhin ein Schutzschaltungsmodul (200) umfasst, das elektrisch mit der Schleifenantenne (300, 400) verbunden ist.

12. Batteriepack (10, 10') nach einem der Ansprüche 10 und 11, wobei die Schleifenantenne (300) Folgendes umfasst:
eine schleifenförmige Antennenstruktur (310) und
eine Deckfolie (320), die die Antennenstruktur (310) bedeckt.

13. Batteriepack (10, 10') nach einem der Ansprüche 10 und 11, wobei die Schleifenantenne (400) Folgendes umfasst:
eine schleifenförmige Antennenstruktur (410) und
einen Isolator (420), der die Antennenstruktur (410) umgibt.

14. Batteriepack (10, 10') nach einem der Ansprüche 10 bis 13, wobei die Antennenstruktur (310, 410) aus Kupfer hergestellt ist.

15. Tragbares Kommunikationsendterminal, das den Batteriepack (10, 10') nach einem der Ansprüche 1 bis 14 umfasst.

## Revendications

1. Assemblage de batterie (10, 10'), comprenant :
une cellule nue (100, 100a) ayant des première et deuxième surfaces (103, 103a ; 104) opposées, et des troisième et quatrième surfaces opposées (105, 106) qui sont plus petites que les première et deuxième surfaces (103, 104) ; et
un absorbeur (500, 600, 700, 800) disposé sur la première surface (103, 103a) de la cellule nue (100, 100a), comprenant un corps fritté en ferrite,
dans lequel l'absorbeur (700, 800) comprend une pluralité de sections séparées (710, 720, 730, 740 ; 810, 820, 830, 840), les sections étant séparées par des canaux qui s'étendent à travers le centre de la première surface (103, 103a).

2. Assemblage de batterie (10, 10') selon la revendication 1, dans lequel l'absorbeur a de préférence une perméabilité magnétique de 100 à 115 T, et dans lequel le ferrite est choisi dans le groupe consistant en ferrite de nickel, ferrite de zinc, ferrite de nickel-zinc et ferrite de baryum.

3. Assemblage de batterie (10, 10') selon l'une quelconque des revendications 1 et 2, dans lequel le ferrite est un ferrite de nickel-zinc comprenant de 47 à 48 % en poids d'oxyde de fer, 30 % en poids d'oxyde de nickel, 20 % en poids d'oxyde de zinc et 2 à 3 % en poids d'oxyde de cuivre, sur la base du poids total du ferrite de nickel-zinc.

4. Assemblage de batterie (10, 10') selon l'une quelconque des revendications 1 à 3, dans lequel l'absorbeur (500, 600, 700, 800) a une épaisseur égale ou inférieure à 1 mm, de préférence de 0,05 à 0,3 mm.

5. Assemblage de batterie (10, 10') selon l'une quelconque des revendications 1 à 4, dans lequel l'absorbeur (500, 600, 700, 800) couvre de 50 % à 100 % de la première surface (103, 103a) de la cellule nue (100, 100a).

6. Assemblage de batterie (10, 10') selon l'une quelconque des revendications 1 à 5, comprenant en outre une couche de polymère disposée sur la surface de l'absorbeur (500, 600, 700, 800).

7. Assemblage de batterie (10, 10') selon l'une quelconque des revendications 1 à 6, comprenant en outre un ruban double face ou un adhésif, pour fixer la cellule nue (100, 100a) à l'absorbeur (500, 600, 700, 800).

8. Assemblage de batterie (10, 10') selon l'une quelconque des revendications 1 à 7, dans lequel l'absorbeur (600) est disposé dans une rainure (115) correspondant à la forme de l'absorbeur (600), formée dans la première surface (103a) de la cellule nue (100a).

9. Assemblage de batterie (10, 10') selon l'une quelconque des revendications 1 à 8, dans lequel les sections (710, 720, 730, 740 ; 810, 820, 830, 840) sont de forme triangulaire et/ou rectangulaire.

10. Assemblage de batterie (10, 10') selon l'une quelconque des revendications 1 à 9, comprenant en outre une antenne (300, 400) disposée sur l'absorbeur (500), l'antenne (300, 400) transmettant / recevant de préférence un signal radiofréquence (RF) à 13,56 MHz.

11. Assemblage de batterie (10, 10') selon la revendication 10, comprenant en outre un module de circuit de protection (200) qui est connecté électriquement à l'antenne (300, 400).

12. Assemblage de batterie (10, 10') selon l'une quelconque des revendications 10 et 11, dans lequel l'antenne (300) comprend :
un motif d'antenne en forme de boucle (310) ; et
un film de recouvrement (320) couvrant le motif d'antenne (310).

13. Assemblage de batterie (10, 10') selon l'une quelconque des revendications 10 et 11, dans lequel l'antenne (400) comprend :
un motif d'antenne en forme de boucle (410) ; et
un isolant (420) entourant le motif d'antenne (410).

14. Assemblage de batterie (10, 10') selon l'une quelconque des revendications 10 à 13, dans lequel le motif d'antenne (310, 410) est constitué de cuivre.

15. Terminal de communication mobile comprenant l'assemblage de batterie (10, 10') selon l'une quelconque des revendications 1 à 14.
